# EUROPÄISCHE PATENTSCHRIFT

(11) **EP 3 046 848 B1**
(45) Veröffentlichungstag und Bekanntmachung des Hinweises auf die Patenterteilung: **21.06.2017**
(21) Anmeldenummer: 14777492.1
(22) Anmeldetag: 09.09.2014
(51) Int. Cl.: B65D 17/00, H01Q 1/22, G06K 19/07

(54) **GETRÄNKEDOSE MIT ANTENNE FÜR DATENÜBERTRAGUNG**
BEVERAGE CAN WITH ANTENNA FOR DATA TRANSMISSION
BOÎTE À BOISSON POURVUE D'UNE ANTENNE POUR LA TRANSMISSION DE DONNÉES

(30) Priorität: 17.09.2013 AT 505902013
(43) Veröffentlichungstag der Anmeldung: 27.07.2016
(73) Patentinhaber: Seibersdorf Labor GmbH, 2444 Seibersdorf (AT)
(72) Erfinder: SCHMID, Gernot, A-2833 Bromberg (AT)
(74) Vertreter: Wildhack & Jellinek
(86) Internationale Anmeldenummer: PCT/AT2014/050200
(87) Internationale Veröffentlichungsnummer: WO 2015/039151

(56) Entgegenhaltungen:
- WO-A1-2014/161021
- DE-A1- 10 344 270
- US-A1- 2005 162 277
- US-A1- 2010 117 797
- US-A1- 2010 283 580
- US-A1- 2011 102 150

## Beschreibung

Die Erfindung betrifft eine Dose gemäß dem Oberbegriff des Patentanspruches 1, wie aus DE 103 44 270 A1 bekannt. Aus dem Stand der Technik ist eine Vielzahl von Getränkedosen bekannt, die mittels eines Einmalverschlusses geöffnet werden können, wobei mit dem Öffnen jeweils ein Verschlussbereich aus dem Körper der Dose herausgebrochen wird, sodass der Inhalt der Dose aus dieser entleert werden kann.

Es ist aus dem Stand der Technik auch bekannt, an Gegenständen, insbesondere auch an Dosen, RFID-/NFC-Antennen und RFID-/NFC-Transponder anzuordnen, um mittels eines externen Datenkommunikationsgerätes Daten, die im Transponder abgespeichert sind, an das externe Kommunikationsgerät zu übertragen bzw. Daten vom Kommunikationsgerät zum Transponder zu übertragen und im Transponder abzuspeichern.

Aus dem vorerwähnten Dokument DE 10344270 A1 ist eine Dose umfassend einen zumindest teilweise elektrisch leitfähigen Körper aus Aluminium bekannt, wobei auf einer Stirnwand der Dose ein Verschlussbereich durch eine Sollbruchkante zumindest teilweise abgegrenzt ist. Beim Verschwenken des Öffnungselements gegenüber der Dose reißt die Sollbruchkante ab und die Dose kann entleert werden. Das Öffnungselement weist einen metallischen Grundkörper auf der an einem Endbereich eine Schleife mit einer elektrischen Unterbrechung aufweist. Aus dem Dokument US 2011/102150 ist ebenfalls eine Kombination eines Dosenöffner-Tabs mit Antennenfunktion bekannt.

Aus dem Stand der Technik ist jedoch keine Möglichkeit bekannt, dass Daten ausschließlich dann von einer Getränkedose an ein externes Datenkommunikationsgerät übertragbar sind, wenn ein Einmalverschluss auf der Dose geöffnet wurde. Eine solche Vorrichtung könnte beispielsweise dazu verwendet werden, bestimmte, im Transponder abgespeicherte Informationen nur demjenigen zugänglich zu machen, der die jeweilige Dose erworben hat. Typischerweise kann eine solche Dose vorteilhaft für Gewinnspiele eingesetzt werden, bei denen es erforderlich ist, dass der jeweilige Mitspieler die Dose gekauft bzw. geöffnet hat.

Aufgabe der Erfindung ist es somit, eine Dose zur Verfügung zu stellen, mit der Daten von einem an der Dose angeordneten Transponder an ein externes Datenkommunikationsgerät erst dann übertragbar sind, wenn die jeweilige Dose geöffnet ist und/oder mit einem externen Datenkommunikationsgerät auf einem auf der Dose angeordneten Transponder erst dann Daten abgespeichert werden können, wenn die jeweilige Dose geöffnet ist.

Die Erfindung löst diese Aufgabe bei der Dose der eingangs genannten Art mit dem Merkmal des Kennzeichens des Patentanspruches 1. In einer Dose umfassend einen zumindest teilweise elektrisch leitfähigen Körper, insbesondere aus Aluminium, wobei auf einer Stirnwand der Dose ein Verschlussbereich durch eine Sollbruchkante zumindest teilweise abgegrenzt ist und wobei die Dose ein Öffnungselement aufweist, wobei das Öffnungselement in seiner Ausgangslage an der Stirnwand der Dose zumindest teilweise flächig anliegt und mit der Stirnwand an zumindest einer Stelle verbunden ist, wobei bei Verschwenken des Öffnungselements gegenüber der Dose von der Ausgangslage in eine Öffnungslage der Verschlussbereich von der Sollbruchkante abreißt und sich in dem von der Sollbruchkante abgegrenzten Zwischenbereich eine Öffnung zum Entleeren des Inhalts der Dose ausbildet, hat das Öffnungselement einen metallischen Grundkörper, der an einem Endbereich eine Schleife mit einer elektrischen Unterbrechung aufweist, wobei eine Antenne und ein an die Antenne angeschlossener Transponderchip vorgesehen ist, und die Antenne am Grundkörper zumindest teilweise, insbesondere vollständig, anliegt und gegenüber dem Grundkörper elektrisch isoliert und ferner unterbrechungsfrei, zumindest teilweise entlang der durch die Unterbrechung elektrisch unterbrochenen Schleife angeordnet ist. Kennzeichnend ist die Antenne an der in Ausgangslage der Stirnwand zugewandten Seite des Öffnungselements angeordnet. Bei einer derartigen Dose wird eine drahtlose Kommunikation zwischen dem am Öffnungselement der Dose angeordneten Transponderchip und einem externen Datenkommunikationsgerät durch die elektromagnetische Rückwirkung der in der metallischen Stirnwand der Dose induzierten elektrischen Ströme auf das elektromagnetische Feld des Datenkommunikationsgerätes effektiv unterdrückt, solange sich das Öffnungselement in Ausgangslage und damit die Antenne sich in unmittelbarer Nähe der metallischen Stirnwand der Dose befindet.

Hierbei ist vorteilhaft, dass eine Datenkommunikation zwischen dem auf der Dose angeordneten Transponder und einem externen Datenkommunikationsgerät erst dann möglich ist, wenn die Dose geöffnet ist. Dies wird insbesondere durch die im Öffnungselement vorgesehene Unterbrechung erreicht, da dadurch im Öffnungselement im geöffneten Zustand im Bereich der Antenne keine oder nur unwesentliche Wirbelströme induziert werden können, die eine Kommunikation beeinträchtigen würden.

Eine Datenkommunikation ist jedenfalls dann unmöglich, wenn das Öffnungselement in seiner Ausgangslage liegt und die Dose noch nicht geöffnet wurde.

Eine vorteilhafte Ausbildung der Erfindung, die eine einfache Fertigung ermöglicht, sieht vor, dass ein Träger für die Antenne an der in Ausgangslage der Stirnwand zugewandten Seite des Öffnungselements angeordnet ist.

Eine vorteilhafte Unterdrückung der Kommunikation wird erreicht, wenn die Antenne von dem einen der Unterbrechung nahen Ende der Schleife des Öffnungselements zum gegenüberliegenden der Unterbrechung nahen Ende der Schleife des Öffnungselements über die Unterbrechung geführt ist.

Um eine Kommunikation zwischen dem auf der Dose angeordneten Transponder und einem externen Datenkommunikationsgerät wirksam zu vermeiden solange die Dose nicht geöffnet wurde, kann vorgesehen sein, dass die Antenne in der Ausgangslage einen maximalen Abstand von weniger als 3 mm, insbesondere von weniger als 0,2 mm, von der Wand der Dose aufweist und/oder dass die Antenne zumindest teilweise an der Dose anliegt.

Zum selben Zweck kann alternativ oder zusätzlich vorgesehen sein, dass die Antenne derart angeordnet ist, dass in der Ausgangslage elektromagnetische Felder, die auf die Antenne gerichtet sind, vom Wand- oder Oberflächenbereich der Dose derart verändert werden, dass die Einkoppelung von elektromagnetischen Feldern in die Antenne unterdrückt wird bzw. hinreichend geschwächt wird, so dass keine Datenkommunikation zwischen dem auf der Dose angeordneten Transponder und einem externen Datenkommunikationsgerät möglich ist.

Um eine Kommunikation zwischen einem externen Datenkommunikationsgerät mit dem Transponder zu ermöglichen, kann vorgesehen sein, dass die Antenne in Öffnungslage vom leitfähigen Wand- und Oberflächenbereich der Dose abgehoben und/oder entfernt ist und/oder zu diesem verschwenkt ist und dass die Antenne in Öffnungslage elektromagnetische Felder, die auf sie gerichtet sind, in einer für drahtlose Datenkommunikation ausreichenden Form und Intensität empfängt und an den Transponderchip weitergibt.

Um eine Abschirmung oder Verdrängung von auf die Antenne gerichteten elektromagnetischen Wellen in der Öffnungslage wirksam zu vermeiden, kann vorgesehen sein, dass bei einer Übertragungsfrequenz im Bereich zwischen 100 kHz und 1000 MHz, insbesondere im Bereich von 120 bis 135 kHz, im Bereich von 13 bis 14 MHz oder im Bereich von 860 bis 910 MHz, die spezifische elektrische Leitfähigkeit des Trägermaterials auf oder in dem die Antenne angeordnet ist kleiner ist als 1 S/m, und dass die elektrische Permittivität des Trägermaterials auf oder in dem die Antenne angeordnet ist kleiner ist als 100*8,854*10⁻¹² As/Vm.

Um eine Abschirmung oder Verdrängung von auf die Antenne gerichteten elektromagnetischen Wellen in der Ausgangslage wirksam zu gewährleisten, kann vorgesehen sein, dass bei einer Übertragungsfrequenz im Bereich zwischen 100 kHz und 1000 MHz, insbesondere im Bereich von 120 bis 135 kHz, im Bereich von 13 bis 14 MHz oder im Bereich von 860 bis 910 MHz, derjenige Wand- oder Oberflächenbereich der Dose, an dem das Öffnungselement anliegt, eine spezifische elektrische Leitfähigkeit von zumindest 10 S/m, insbesondere von zumindest 10⁶ S/m aufweist, und eine magnetische Permeabilität von zumindest 0,99*4*π*10⁻⁷ Vs/Am, aufweist.

Eine besonders vorteilhafte Anordnung, mit der ein vorteilhaftes Verschwenken des Öffnungselementes möglich ist, sieht vor, dass das Öffnungselement über eine Niete mit der Dose verbunden ist, wobei das Öffnungselement einen in seiner Ausgangslage am Verschlussbereich anliegenden Druckbereich zum Eindrücken des Verschlussbereichs aufweist.

Um die Dose einfach zu öffnen, kann hierbei vorgesehen sein, dass das Öffnungselement einen dem Druckbereich gegenüberliegenden Betätigungsbereich aufweist, wobei der Druckbereich und der Betätigungsbereich durch die Niete voneinander abgegrenzt sind und gemeinsam wie ein zweiarmiger durch die Niete angelenkter Hebel wirken.

Eine besonders einfache mechanische Ausgestaltung, die ein gutes Verschwenken des Öffnungselementes gegenüber der Dose ermöglichst, sieht vor, dass das Öffnungselement ein gegenüber seinem Körper verschwenkbares Verbindungselement aufweist, das mittels der Niete mit der Wand der Dose verbunden ist.

Besonders vorteilhaft bei der Verwendung von Übertragungsfrequenzen von 10-15 MHz ist, dass die Antenne zumindest teilweise entlang der Umfangskante des Öffnungselements in einer Einkerbung angeordnet ist.

Ein bevorzugtes Ausführungsbeispiel der Erfindung wird anhand der folgenden Zeichnungsfiguren näher dargestellt.

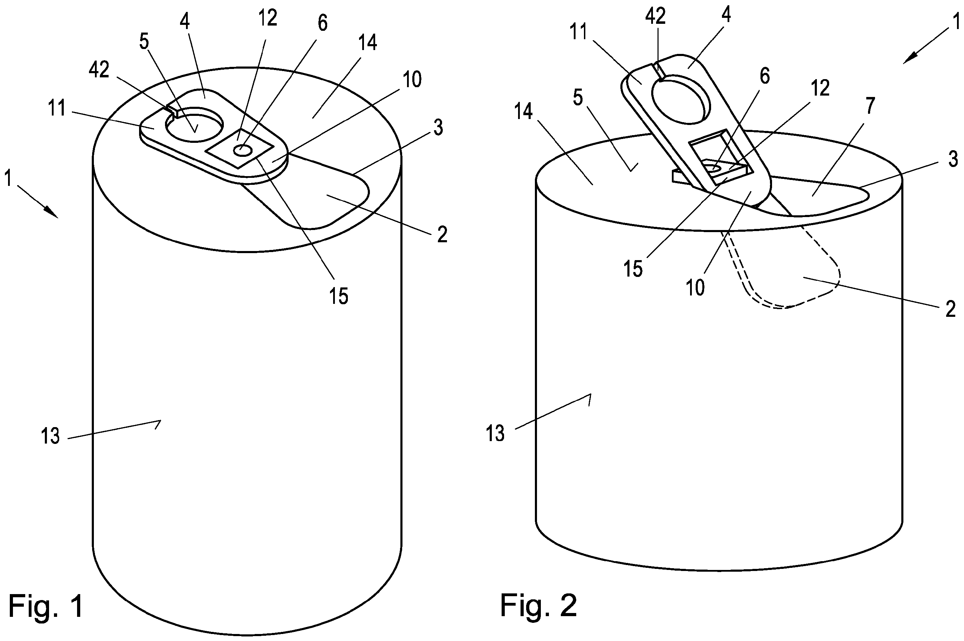

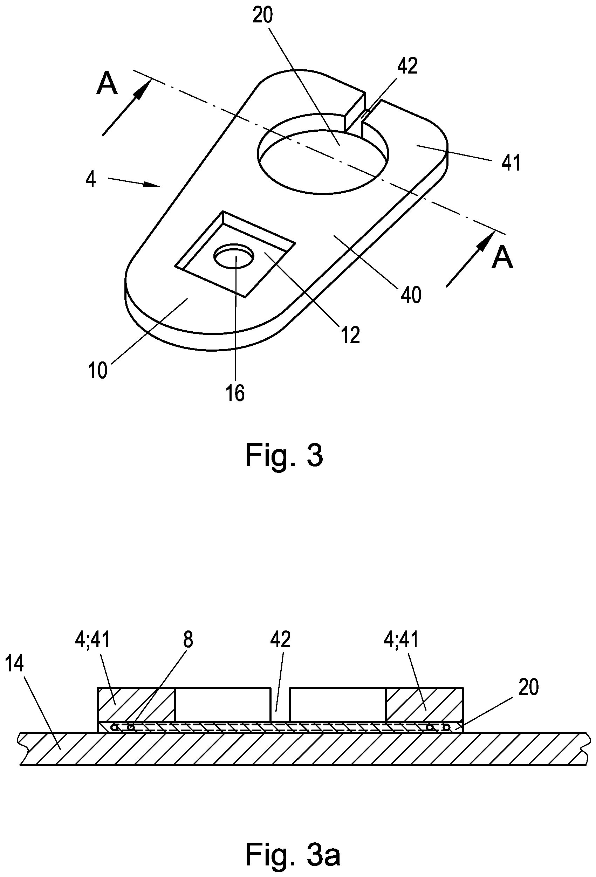

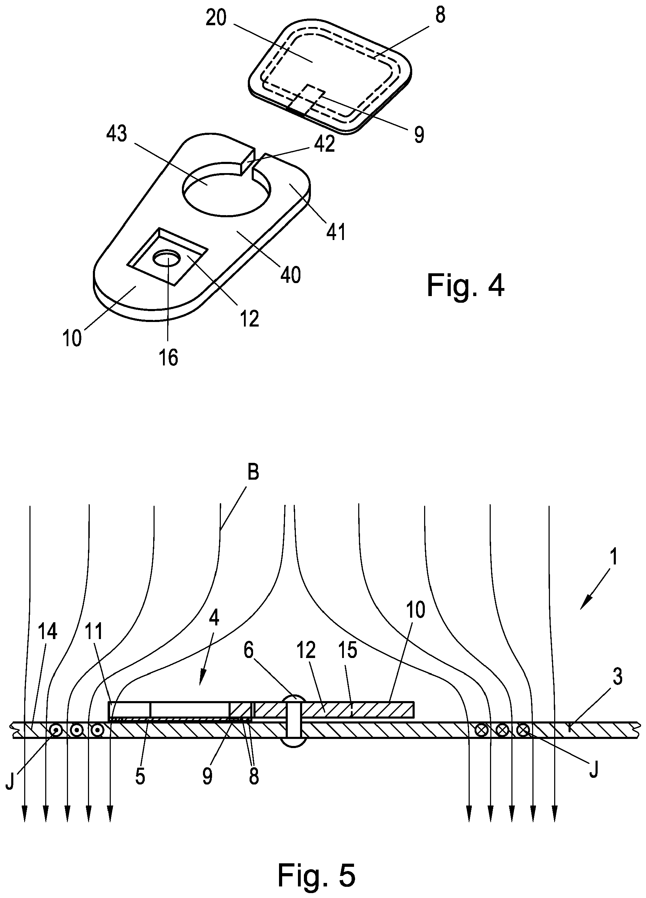

**Fig. 1** zeigt eine Ausführungsform der Erfindung in Ausgangslage. **Fig. 2** zeigt die in Fig. 1 dargestellte Ausführungsform der Erfindung in Öffnungslage. **Fig. 3** zeigt eine Ausführungsform eines erfindungsgemäßen Öffnungselements 4. Fig. 3a zeigt einen durch das Öffnungselement verlaufenden Schnitt bei der in Fig. 3 dargestellten Ausführungsform der Erfindung. **Fig. 4** zeigt die Zusammensetzung des Öffnungselements aus einem Grundkörper und einem Träger. **Fig. 5** zeigt das elektromagnetische Verhalten der Dose sowie des Öffnungselementes in Ausgangslage.

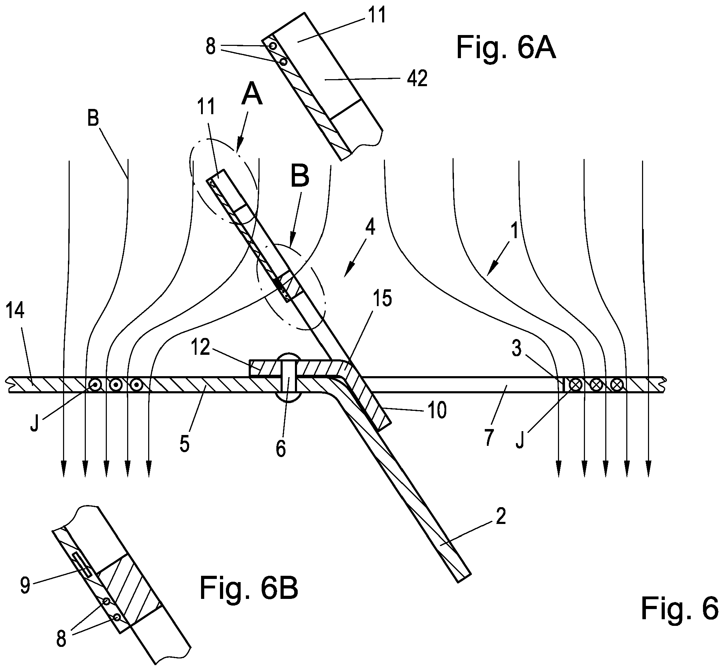

**Fig. 6** zeigt das elektromagnetische Verhalten der Dose sowie des Öffnungselementes in Öffnungslage. **Fig. 6A** und **Fig. 6B** zeigen Details A und B aus **Fig. 6****.**

In **Fig. 1** ist eine zylindrische Dose 1 gemäß einem bevorzugten Ausführungsbeispiel der Erfindung dargestellt. Der Körper der Dose 1 besteht zur Gänze aus Aluminium, wobei die Dose 1 an ihrer Mantelfläche 13 eine bedruckte, dekorative Folie aufweisen kann. An der Stirnwand 14 der Dose 1 ist ein Verschlussbereich 2 vorgesehen, der durch eine Sollbruchkante 3 abgegrenzt ist. Ferner weist die Dose 1 ein Öffnungselement 4 auf, das über eine eine Ausnehmung 16 (**Fig. 3**) des Öffnungselementes 4 durchsetzende Niete 6 mit der Stirnwand 14 der Dose 1 verbunden ist. Grundsätzlich reicht es jedoch aus, dass derjenige Wand- und Oberflächenbereich 5 der Dose 1, an dem das Öffnungselement 4 anliegt, eine ausreichende Rückwirkung auf ein von außen appliziertes elektromagnetisches Feld im Bereich des Öffnungselementes 4 bewirkt, sodass bei anliegendem Öffnungselement 4 am Wand- und Oberflächenbereich 5 keine drahtlose elektromagnetische Datenübertragung zwischen einer im bzw. am Öffnungselement 4 angeordneten Antenne 8 und einem externen Datenkommunikationsgerät möglich ist. (**Fig. 3**) Das Öffnungselement 4 verfügt über ein gegenüber seinem Körper verschwenkbares Verbindungselement 12 mit der Ausnehmung 16, das mittels der Niete 6 mit der Stirnwand 14 der Dose 1 verbunden ist und das an der Stirnwand 14 der Dose 1 flächig anliegt. Üblicherweise lässt sich das Öffnungselement 4 um die Nietenachse der Niete 4 drehen, es liegt im vorliegenden Ausführungsbeispiel keine bewegungsstarre Verbindung des Öffnungselements 4 mit der Dose vor. Im vorliegenden Ausführungsbeispiel liegt das Öffnungselement an der Stirnwand 14 der Dose 1 flächig an.

In **Fig. 2** ist die in **Fig. 1** dargestellte Ausführungsform der Dose 1 in Öffnungslage dargestellt. Beim Vorgang des Öffnens wird ein dem Verschlussbereich 2 abgewandter Betätigungsbereich 11 des Öffnungselementes 4 angehoben und das gesamte Öffnungselement 4 bezüglich der Anlenkkante 15 zwischen dem Verbindungselement 12 und dem Körper des Öffnungselementes 4 verschwenkt. Hierdurch wird der am Verschlussbereich 2 anliegende Druckbereich 10 des Öffnungselementes 4 in Richtung des Verschlussbereiches 2 ins Innere der Dose 1 gedrückt, wodurch der Verschlussbereich 2 entlang der Sollbruchkante 3 von der Stirnwand 14 der Dose 1 abreißt und in die Dose 1 eintritt. Hierdurch wird eine Öffnung 7 geschaffen, aus der der Inhalt der Dose 1 aus dieser entleert werden kann.

In **Fig. 3, 3a** **und** **4** ist das Öffnungselement 4 im Detail dargestellt. **Fig. 3** zeigt eine Ausführungsform eines erfindungsgemäßen Öffnungselements 4. **Fig. 4** zeigt die Zusammensetzung des Öffnungselements 4 aus einem Grundkörper 40 und einem Träger 20. Das Öffnungselement 4 weist einen Trägerkörper 40 aus leitfähigem Material, insbesondere Aluminium auf, wobei auf der der Stirnwand 14 zugewandten Seite des Trägerkörpers 40 einer Trägerfolie 20 angeordnet bzw. aufgeklebt ist, die zumnidest teilweise am Öffnungselement 4 anliegt. Auf oder innerhalb dieser Trägerfolie 20 verlaufen die Wicklungen der Antenne 8, die an einen auf der Trägerfolie 20 gelegenen Transponderchip 9 angeschlossen ist. Die Antenne 8 verläuft entlang des Randes der unteren Stirnfläche des Trägerkörpers 40, die der Deckwand 14 der Dose 1 zugewandt ist. Der Bereich des Grundkörpers 40 des Öffnungselements 4, an den die Trägerfolie 20 und die Antenne 8 anliegt, ist schleifenförmig ausgebildet, wobei die Schleife 41 nicht durchgängig ausgebildet ist, sondern eine Unterbrechung 42 aufweist. Durch diese Unterbrechung 42 wird eine Abschirmung elektromagnetischer Felder an der Antenne 8 vermieden, wenn die Dose 1 geöffnet und die Antenne 8 von der Stirnwand 14 der Dose 1 entfernt wird. Durch die Unterbrechung 42 wird die Abschirmung, die durch die Schleife 41 des Grundkörpers 4 an sich bestünde, beseitigt. Die Breite der Unterbrechung 42, d.h. der Bereich, in dem die Antenne 8 von dem Grundkörper 40 freigestellt ist, kann beliebig klein sein, solange sich keine relevanten elektrischen Ströme quer zur Unterbrechung ausbilden können. In der Praxis wird die breite der Unterbrechung etwa 0,1 bis 5 mm betragen.

**Fig. 3a** zeigt eine Schnittdarstellung (A-A) des in **Fig. 3** dargestellten Öffnungselements im Bereich der Unterbrechung 42 in Ausgangslage anliegend an der Stirnwand 14 der Dose. Die Antenne 8 verläuft im Träger 20 und ist vom Grundkörper 40 bzw. der Schleife elektrisch isoliert. Die Schleife 41 weist im Bereich der Unterbrechung 42 zwei Endbereiche auf, die miteinander nicht elektrisch leitend verbunden sind, sodass die Schleife 41 des Grundkörpers 40 nicht geschlossen ist und daher auch keine elektromagnetischen Felder verdrängt. Die Antenne 8 ist von dem einen der Unterbrechung 42 nahen Ende der Schleife 41 des Öffnungselements 4 zum gegenüberliegenden der Unterbrechung 42 nahen Ende der Schleife 41 des Öffnungselements 4 über die Unterbrechung 42 geführt. Während durch die Antenne 8 und den Träger 20 eine mechanische Überbrückung der Unterbrechung 42 erfolgt, sind die beiden einander an der Unterbrechung 42 gegenüberliegenden Enden der Schleife nicht unmittelbar elektrisch leitend verbunden. Über die Antenne 8 ist somit in der Öffnungslage eine drahtlose elektromagnetische Kommunikation möglich.

Bei der Unterbrechung 42 handelt es sich vorzugsweise um eine Aussparung in der Schleife 41, die vorteilhafterweise mechanisch durch Abtrennen eines Teilbereichs aus einer ursprünglich vollständigen Schleife erstellt wurde.

Durch die Anordnung des Trägers 20 sowie der Antenne 8 im Bereich der Unterbrechung 42 kann eine Beeinträchtigung der durch die Unterbrechung 42 verursachten mechanischen Stabilität des Öffnungselements 4 verhindert werden. Gegebenenfalls kann auch im Bereich der Unterbrechung 42 eine elektrisch isolierende Verbindung zwischen den beiden Enden der Schleife 41 bestehen, um eine verbesserte mechanische Stabilität zu gewährleisten.

Das Verbindungselement 12 des Öffnungselementes 4 weist eine zentrale Ausnehmung 16 auf, durch die die Niete 6 hindurchgeführt ist (**Fig. 5****,** **6**).

Der Träger 20, der die Antenne 8 und den Transponderchip 9 trägt, ist vorteilhaft als Folie ausgebildet. Diese kann mit dem Grundkörper 40 des Öffnungselements 4 verklebt oder verschweißt sein. Vorteilhaft kann der Träger 20 als Klebemittel ausgebildet sein. Es ist jedoch auch möglich, die Antenne 8 und den Transponderchip 8 unmittelbar auf den Grundkörper 4 aufzubringen.

**Fig. 5** zeigt einen durch die Unterbrechung 42 des Öffnungselements verlaufenden Schnitt durch die Dose 1 und das Öffnungselement 4 sowie das elektromagnetische Verhalten der Dose 1 und des Öffnungselementes 4 in Ausgangslage. Wie bereits erwähnt, liegt die Antenne 8 am Öffnungselement 4 an der der Stirnwand 14 der Dose 1 zugewandten Seite an. Die Antenne 8 liegt im vorliegenden Ausführungsbeispiel vollflächig an der Stirnwand 14 der Dose an. Dies ist jedoch nicht zwingend erforderlich. Für den gewünschten Effekt einer ausreichenden Rückwirkung auf die von einem externen Datenkommunikationsgerät auf die Antenne 8 gerichteten elektromagnetischen Felder, sodass zwischen dem externen Datenkommunikationsgerät und dem Transponderchip 9 über die Antenne 8 eine Kommunikation unmöglich ist, reicht es aus, dass die Antenne 8 in der Ausgangslage einen maximalen Abstand von weniger als 2-3 mm aufweist. In der Ausgangslage werden dann magnetische Felder, die auf die Antenne 8 gerichtet sind, vom Wand- und Oberflächenbereich 5 auf der Stirnwand 14 der Dose 1 ausreichend verdrängt bzw. die elektrischen Eigenschaften der Antenne 8 derart verändert, sodass zwischen einem externen Datenkommunikationsgerät und dem Transponderchip 9 über die Antenne 8 eine Kommunikation unmöglich ist. Die elektrische Verbindung zwischen dem Transponderchip 9 und der Antenne 8 ist in den **Fig. 5** **und** **6** nicht dargestellt.

**Fig. 6** zeigt einen durch die Unterbrechung 42 des Öffnungselements verlaufenden Schnitt durch die Dose 1 und das Öffnungselement 4 sowie das elektromagnetische Verhalten der Dose 1 und des Öffnungselementes 4 in Öffnungslage. Im Gegensatz zur Ausgangslage ist in der Öffnungslage aufgrund des Verschwenkens des Öffnungselementes 4 gegenüber der Stirnwand 14 der Dose 1 die Antenne 8 im Betätigungsbereich 11 des Öffnungselementes 4 von der Stirnwand 14 der Dose 1 abgehoben. In diesem Zustand ist das Öffnungselement 4 vom Wand- und Oberflächenbereich 5 deutlich elektromagnetisch entkoppelt. Dass heißt, die vom Wand- und Oberflächenbereich 5 verursachte Rückwirkung auf das von einem externen Datenkommunikation applizierte elektromagnetische Feld wirkt sich in nur sehr abgeschwächter Form auf die Antenne 8 aus. Auf diese Art kann elektromagnetische Energie sowie Information mittels elektromagnetischer Felder von einem externen Datenkommunikationsgerät über die Antenne 8 an den Transponderchip 9 übertragen werden.

Typischerweise werden Dosen 1 vollständig aus Aluminium oder einem sonstigen Metall gefertigt. Dies ist jedoch im vorliegenden Ausführungsbeispiel nicht erforderlich. Es ist, um den ausreichenden Effekt der Feldverdrängung zu gewährleisten, lediglich erforderlich, dass derjenige Wand- und Oberflächenbereich 5 der Dose 1, an dem das Öffnungselement 4 anliegt, elektrisch und/oder magnetisch leitfähig ist. Der Wand- oder Oberflächenbereich 5 der Dose 1, an den das Öffnungselement 4 anliegt, weist im vorliegenden Ausführungsbeispiel eine elektrische Leitfähigkeit von zumindest 10⁶ S/m insbesondere von zumindest 10 S/m auf. Zudem weist die Dose 1 im Wand- und Oberflächenbereich 5, an den das Öffnungselement 4 anliegt, eine magnetische Permeabilität von zumindest 4*π*10⁻⁷ Vs/Am insbesondere von zumindest 0,99*4*π*10⁻⁷ Vs/Am auf. Aluminium, das typischerweise als Material für den Wand- und/oder Oberflächenbereich der Dose 1, insbesondere für die gesamte Dose 1, eingesetzt wird, weist eine elektrische Leitfähigkeit von 37*10⁶ S/m und eine magnetische Permeabilität von (1+2,2*10⁻⁵)* 4*π*10⁻⁷ Vs/Am auf.

In **Fig. 5** **und** **6** sind weiters magnetische Feldlinien B eingezeichnet, um den speziellen Fall der magnetischen Kopplung zwischen einem von einem externen Datenkommunikationsgerät erzeugten magnetischen Feld und der Antenne 8 zu illustrieren.

In dem in **Fig. 5** dargestellten Fall mit dem Öffnungselement 4 in Ausgangslage, d.h., mit einem dem Wand- und Oberflächenbereich 5 anliegenden Öffnungselement 4, werden im elektrisch und/oder magnetisch leitfähigen Wand- und Oberflächenbereich 5 vom magnetischen Feld des externen Datenkommunikationsgerätes Wirbelströme J erzeugt, die im Bereich des Öffnungselementes 4 eine Feldverdrängung bewirken, sodass das resultierende die Antenne 8 durchsetzende Magnetfeld zu gering ist, um eine drahtlose elektromagnetische Kommunikation zwischen dem externen Datenkommunikationsgerät und dem Transponderchip 9 über die Antenne 8 zu ermöglichen.

In dem in **Fig. 6** dargestellten Fall mit dem gegenüber dem Wand- und Oberflächenbereich 5 abgehobenen Öffnungselement 4 besteht ein ausreichend großer Abstand zwischen der Antenne 8 und dem Wand- und Oberflächenbereich 5, sodass die durch die Wirbelströme im Wand- und Oberflächenbereich 5 bewirkte Feldverdrängung nur mehr stark abgeschwächt auf die Antenne 8 wirkt und die Antenne 8 ausreichend vom Magnetfeld durchsetzt wird, sodass eine drahtlose elektromagnetische Kommunikation zwischen dem externen Datenkommunikationsgerät und dem Transponderchip 9 über die Antenne 8 möglich ist.

## Patentansprüche

1. Dose (1) umfassend einen zumindest teilweise elektrisch leitfähigen Körper, insbesondere aus Aluminium, wobei auf einer Stirnwand (14) der Dose (1) ein Verschlussbereich (2) durch eine Sollbruchkante (3) zumindest teilweise abgegrenzt ist und wobei die Dose (1) ein Öffnungselement (4) aufweist, wobei das Öffnungselement (4) in seiner Ausgangslage an der Stirnwand (14) der Dose (1) zumindest teilweise flächig anliegt und mit der Stirnwand (14) an zumindest einer Stelle verbunden ist,
- wobei bei Verschwenken des Öffnungselements (4) gegenüber der Dose (1) von der Ausgangslage in eine Öffnungslage der Verschlussbereich (2) von der Sollbruchkante (3) abreißt und sich in dem von der Sollbruchkante (3) abgegrenzten Zwischenbereich eine Öffnung (7) zum Entleeren des Inhalts der Dose (1) ausbildet,
- wobei das Öffnungselement (4) einen metallischen Grundkörper (40) aufweist, der an einem Endbereich eine Schleife (41) mit einer elektrischen Unterbrechung (42) aufweist,
- wobei eine Antenne (8) und ein an die Antenne (8) angeschlossener Transponderchip (9) vorgesehen ist,
- wobei die Antenne (8) am Grundkörper (40) zumindest teilweise, insbesondere vollständig, anliegt und gegenüber dem Grundkörper (40) elektrisch isoliert ist, und
- wobei die Antenne (8) unterbrechungsfrei, zumindest teilweise entlang der durch die Unterbrechung (42) elektrisch unterbrochenen Schleife (41) angeordnet ist,
**dadurch gekennzeichnet, dass**
die Antenne (8) an der in Ausgangslage der Stirnwand (14) zugewandten Seite des Öffnungselements (4) angeordnet ist.

2. Dose (1) nach Anspruch 1, **dadurch gekennzeichnet, dass** die Antenne (8) und der Transponderchip (9) auf einem oder innerhalb eines gemeinsamen Träger (20), insbesondere einer Trägerfolie, angeordnet, vorzugsweise aufgedruckt, sind, der mit dem Grundkörper (40) verbunden, insbesondere verklebt oder verschweißt ist.

3. Dose (1) nach Anspruch 2, **dadurch gekennzeichnet, dass** der Träger (20) an der in Ausgangslage der Stirnwand (14) zugewandten Seite des Öffnungselements (4) angeordnet ist.

4. Dose (1) nach einem der vorangehenden Ansprüche, **dadurch gekennzeichnet, dass** die Antenne (8) von dem einen der Unterbrechung (42) nahen Ende der Schleife (41) des Öffnungselements (4) zum gegenüberliegenden der Unterbrechung (42) nahen Ende der Schleife (41) des Öffnungselements (4) über die Unterbrechung (42) geführt ist.

5. Dose (1) nach Anspruch 2 oder 3 oder nach Anspruch 4, sofern auf Anspruch 2 rückbezogen, **dadurch gekennzeichnet,**
- **dass** bei einer Übertragungsfrequenz im Bereich zwischen 100 kHz und 1000 MHz, insbesondere im Bereich von 120 bis 135 kHz, im Bereich von 13 bis 14 MHz oder im Bereich von 860 bis 910 MHz, die spezifische elektrische Leitfähigkeit des Trägers (20) kleiner ist als 1 S/m, **und**
- **dass** die elektrische Permittivität des Trägers (20) kleiner ist als 100*8,854*10⁻¹² As/Vm.

6. Dose (1) nach einem der vorangehenden Ansprüche, **dadurch gekennzeichnet, dass** die Antenne (8) in der Ausgangslage einen maximalen Abstand von weniger als 3 mm, insbesondere von weniger als 0,2 mm, von der Wand der Dose (1) aufweist und/oder dass die Antenne (8) zumindest teilweise an der Dose (1) anliegt.

7. Dose (1) nach einem der vorangehenden Ansprüche, **dadurch gekennzeichnet, dass** bei einer Übertragungsfrequenz im Bereich zwischen 100 kHz und 1000 MHz, insbesondere im Bereich von 120 bis 135 kHz, im Bereich von 13 bis 14 MHz oder im Bereich von 860 bis 910 MHz, derjenige Wand- oder Oberflächenbereich (5) der Dose (1), an dem das Öffnungselement (4) anliegt
- eine spezifische elektrische Leitfähigkeit von zumindest 10 S/m, insbesondere von zumindest 10⁶ S/m aufweist, **und**
- eine magnetische Permeabilität von zumindest (1+2,2*10⁻⁵)* 4*π*10⁻⁷ Vs/Am, insbesondere von zumindest 0,99*4*π*10⁻⁷ Vs/Am, aufweist.

8. Dose (1) nach einem der vorangehenden Ansprüche, **dadurch gekennzeichnet, dass** das Öffnungselement (4) über eine Niete (6) mit der Dose (1) verbunden ist, wobei das Öffnungselement (4) einen in seiner Ausgangslage am Verschlussbereich (2) anliegenden Druckbereich (10) zum Eindrücken des Verschlussbereichs (2) aufweist.

9. Dose (1) nach Anspruch 8, **dadurch gekennzeichnet, dass** das Öffnungselement einen dem Druckbereich (10) gegenüberliegenden Betätigungsbereich (11) aufweist, wobei der Druckbereich (10) und der Betätigungsbereich (11) durch die Niete (6) voneinander abgegrenzt sind und gemeinsam wie ein zweiarmiger durch die Niete angelenkter Hebel wirken.

10. Dose (1) nach Anspruch 8 oder 9, **dadurch gekennzeichnet, dass** das Öffnungselement (4) ein gegenüber seinem Körper verschwenkbares Verbindungselement (12) aufweist, das mittels der Niete (6) mit der Wand der Dose (1) verbunden ist.

11. Dose (1) nach einem der vorangehenden Ansprüche, **dadurch gekennzeichnet, dass** die Antenne (8) entlang der Umfangskante des Öffnungselements (4) in einer Einkerbung angeordnet ist.

## Claims

1. A can (1) comprising an at least partially electrically conductive body, in particular made of aluminum, wherein on the end wall (14) of the can (1) a closure region (2) is at least partially delimited by a predetermined breaking edge (3) and wherein the can (1) has an opening element (4), wherein the opening element (4) in its starting position bears at least partially flatly against the end wall (14) of the can (1) and is connected with the end wall (14) at at least one point,
- wherein when the opening element (4) is pivoted relative to the can (1) from the starting position into an opening position, the closure region (2) tears away from the predetermined breaking edge (3) and forms an opening (7) for emptying the contents of the can (1) in the intermediate area delimited by the predetermined breaking edge (3),
- wherein the opening element (4) has a metallic basic body (40), which has a loop (41) at one end region with an electrical interruption (42),
- wherein the antenna (8) and a transponder chip (9) which is connected to said antenna (8) are provided,
- wherein the antenna (8) bears at least partially, in particular, completely, against the basic body (40) and is electrically insulated from the basic body (40), and
- wherein the antenna (8) is arranged such that it is free of interruptions, at least partially along the loop (41) which is electrically interrupted by the interruption (42),
**characterized in that**
the antenna (8) is arranged on the side of the opening element (4) facing the end wall (14) in the starting position.

2. A can (1) according to Claim 1, **characterized in that** the antenna (8) and the transponder chip (9) are arranged, preferably pressed on or within a common carrier (20) in particular of a carrier film, which is connected, in particular bonded or welded with the basic body (40).

3. A can (1) according to Claim 2, **characterized in that** the carrier (20) is arranged on the side of the opening element (4) facing the end wall (14) in the starting position.

4. A can (1) according to any one of the preceding claims, **characterized in that** the antenna (8) is guided via the interruption (42) from the end of the loop (41) of the opening element (4) near the interruption (42) to the opposite end of the loop (41) of the opening element (4) near the interruption (42).

5. A can (1) according to Claim 2 or 3 or according to Claim 4, if depending on Claim 2, **characterized in**
- **that** in the case of a transmission frequency in the range between 100 kHz and 1000 MHz, in particular in the range of 120 to 135 kHz, in the range of 13 to 14 MHz or in the range of 860 to 910 MHz, the specific electrical conductive of the carrier (20) is less than 1 S/m, and
- **that** the electrical permittivity of the carrier (20) is less than 100*8.854*10⁻¹² As/Vm.

6. A can (1) according to any one of the preceding claims, **characterized in that** the antenna (8) in the starting position has a maximum distance of less than 3 mm, in particular of less than 0.2 mm, from the wall of the can (1) and/or that the antenna (8) bears at least partially against the can (1).

7. A can (1) according to any one of the preceding claims, **characterized in that** in the case of a transmission frequency in the range between 100 kHz and 1000 MHz, in particular in the range of 120 to 135 kHz, in the range of 13 to 14 MHz or in the range of 860 to 910 MHz, that wall or surface area (5) of the can (1), against which the opening element (4) bears
- has a specific electrical conductivity of at least 10 S/m, in particular of at least 10⁶ S/m, and
- has a magnetic permeability of at least (1+2.2*10⁻⁵)* 4*π*10⁻⁷ Vs/Am, in particular of at least 0.99*4*π*10⁻⁷ Vs/Am.

8. A can (1) according to any one of the preceding claims, **characterized in that** the opening element (4) is connected by means of a rivet (6) with the can (1), wherein the opening element (4) has a pressure area (10) bearing in its starting position against the closure region (2) for pressing in the closure region (2)

9. A can (1) according to Claim 8, **characterized in that** the opening element has an actuation area (11) opposite pressure area (10), wherein the pressure area (10) and the actuation area (11) are delimited from each other by the rivet (6) and act together as a two-armed lever hinged by the rivet.

10. A can (1) according to Claim 8 or 9 **characterized in that** the opening element (4) has a connecting element (12) pivotable in relation to its body, which is connected by means of the rivet (6) with the wall of the can (1).

11. A can (1) according to any one of the preceding claims, **characterized in that** the antenna (8) is arranged along the circumferential edge of the opening element (4) in a notch.

## Revendications

1. Boîte (1) comprenant un corps au moins partiellement électro-conducteur, plus particulièrement en aluminium, moyennant quoi, sur une paroi frontale (14) de la boîte (1), une zone de fermeture (2) est délimitée au moins partiellement par une arête de rupture théorique (3) et la boîte (1) comprenant un élément d'ouverture (4), l'élément ouverture (4) s'appuyant, dans sa position de départ, au moins partiellement sur sa surface, contre la paroi frontale (14) de la boîte (1) et étant reliée avec la paroi frontale (14) au niveau d'au moins un endroit,
- moyennant quoi, lors du pivotement de l'élément d'ouverture (4) par rapport à la boîte (1) de la position de départ vers une position d'ouverture, la zone de fermeture (2) se détache de l'arête de rupture théorique (3) et une ouverture (7) permettant le vidage du contenu de la boîte (1) se forme dans la zone intermédiaire délimitée par l'arête de rupture théorique (3),
- l'élément d'ouverture (4) comprenant un corps de base métallique (40) qui comprend, au niveau d'une zone d'extrémité, une boucle (41) avec une interruption électrique (42),
- une antenne (8) et une puce de transpondeur (9) connectée à l'antenne (8) étant prévue,
- l'antenne (8) s'appuyant contre le corps de base (40) au moins partiellement, plus particulièrement entièrement et étant isolé électriquement par rapport au corps de base (40) et
- l'antenne (8) étant disposée sans interruption, au moins partiellement le long de la boucle (41) électriquement interrompue par l'interruption (42),
**caractérisée en ce que**
l'antenne (8) est disposée sur le côté de l'élément d'ouverture (4), orientée vers la paroi frontale (14) dans la position de départ.

2. Boîte (1) selon la revendication 1, **caractérisée en ce que** l'antenne (8) et la puce de transpondeur (9) sont disposées, de préférence imprimées sur ou à l'intérieur d'un support commun (20), plus particulièrement un film support, qui est relié, plus particulièrement collé ou soudé avec le corps de base (40).

3. Boîte (1) selon la revendication 2, **caractérisée en ce que** le support (20) est disposé sur le côté de l'élément d'ouverture (4) orientée vers la paroi frontale (14) dans la position de départ.

4. Boîte (1) selon l'une des revendications précédentes, **caractérisée en ce que** l'antenne (8) est guidée de l'extrémité de la boucle (41) de l'élément d'ouverture (4) proche de l'interruption (42) vers l'extrémité de la boucle (41) de l'élément d'ouverture (4) opposée à l'extrémité proche de l'interruption (42), en passant par l'interruption (42).

5. Boîte (1) selon la revendication 2 ou 3 ou selon la revendication 4, en référence à la revendication 2, **caractérisée en ce que**
- dans le cas d'une fréquence de transmission dans une plage entre 100 kHz et 1000 MHz, plus particulièrement dans une plage de 120 à 135 kHz, dans une plage de 13 à 14 MHz ou dans une plage de 860 à 910 MHz, la conductivité électrique spécifique du support est inférieure à 1 S/m et
- la permittivité électrique du support (20) est inférieure à 100*8,854*10⁻¹² As/Vm.

6. Boîte (1) selon l'une des revendications précédentes, **caractérisée en ce que** l'antenne (8) présente, dans la position de départ, une distance maximale inférieure à 3 mm, plus particulièrement inférieure à 0,2 mm, entre la paroi et la boîte (1) et/ou **en ce que** l'antenne (8) s'appuie au moins partiellement contre la boîte (1).

7. Boîte (1) selon l'une des revendications précédentes, **caractérisée en ce que**, dans le cas d'une fréquence de transmission dans une plage entre 100 kHz et 1000 MHz, plus particulièrement dans une plage de 120 à 135 kHz, dans une plage de 13 à 14 MHz ou dans une plage de 860 à 910 MHz, la zone de la paroi ou de la surface (5) de la boîte (1) contre laquelle l'élément d'ouverture (4) s'appuie
- présente une conductivité électrique spécifique d'au moins 10 S/m, plus particulièrement d'au moins 10⁶ S/m et
- présente une perméabilité magnétique d'au moins (1+2,2*10-5)*4*π*10⁻⁷ Vs/Am, plus particulièrement d'au moins 0,99*4*π*10⁻⁷ Vs/Am.

8. Boîte (1) selon l'une des revendications précédentes, **caractérisée en ce que** l'élément d'ouverture (4) est relié avec la boîte (1) par l'intermédiaire d'un rivet (6), l'élément d'ouverture (4) comprenant une zone de pression (10) s'appuyant, dans sa position de départ, contre la zone de fermeture (2), pour la compression de la zone de fermeture (2).

9. Boîte (1) selon la revendication 8, **caractérisée en ce que** l'élément d'ouverture comprend une zone d'actionnement (11) opposée à la zone de pression (10), la zone de pression (10) et la zone d'actionnement (11) étant séparées l'une de l'autre par le rivet (6) et agissant ensemble comme un levier à deux bras articulé au niveau du rivet.

10. Boîte (1) selon la revendication 8 ou 9, **caractérisée en ce que** l'élément d'ouverture (4) comprend un élément de liaison (12) pivotant par rapport à son corps, qui est relié au moyen du rivet (6) avec la paroi de la boîte (1).

11. Boîte (1) selon l'une des revendications précédentes, **caractérisée en ce que** l'antenne (8) est disposée le long de l'arête circonférentielle de l'élément d'ouverture (4) dans une rainure.
